# FASCICULE DE BREVET EUROPEEN

(11) **EP 3 286 823 B1**
(45) Date de publication et mention de la délivrance du brevet: **17.03.2021**
(21) Numéro de dépôt: 16715564.7
(22) Date de dépôt: 12.04.2016
(51) Int. Cl.: H02K 1/27, H02K 15/16

(54) **MACHINE ÉLECTRIQUE ET PROCÉDÉ POUR L'ÉQUILIBRAGE DYNAMIQUE DU ROTOR DE CETTE MACHINE ÉLECTRIQUE**
ELEKTRISCHE MASCHINE UND VERFAHREN ZUM DYNAMISCHEN AUSWUCHTEN DES ROTORS DIESER ELEKTRISCHEN MASCHINE
ELECTRIC MACHINE AND METHOD FOR DYNAMICALLY BALANCING THE ROTOR OF SUCH ELECTRIC MACHINE

(30) Priorité: 23.04.2015 FR 1553631
(43) Date de publication de la demande: 28.02.2018
(73) Titulaire: IFP Energies nouvelles, 92500 Rueil-Malmaison (FR); Mavel S.r.l., 11026 Pont Saint Martin (AO) (IT)
(72) Inventeur: BOISSON, Julien, 92330 Sceaux (FR); DIB, Wissam, 92150 Suresnes (FR); BIGLINO, Rinato, 16136 Genova (IT); BETTONI, Davide, Settimo Vittone (TO) (IT)
(74) Mandataire: Leoncini, Alberto
(86) Numéro de dépôt international: PCT/EP2016/057989
(87) Numéro de publication internationale: WO 2016/169808

(56) Documents cités:
- DE-A1-102010 041 599
- US-A- 4 486 678
- US-A1- 2009 066 174
- US-A1- 2011 121 668

## Description

La présente invention se rapporte à une machine électrique et à un procédé pour l'équilibrage dynamique du rotor de cette machine électrique.

Elle concerne plus particulièrement une machine électrique synchrone à reluctance variable.

Généralement, une machine électrique comporte une partie fixe (stator) et une partie rotative (rotor) disposées coaxialement l'une dans l'autre.

Pour de telles machines, le rotor présente des balourds dus à des tolérances de fabrication, de conception mécanique, de répartition de matière,...

Lorsque ce rotor tourne à grande vitesse, ces balourds génèrent des vibrations qui peuvent entraîner un dysfonctionnement de la machine, voire une détérioration du rotor ou de la machine.

De plus, ces vibrations sont la source de bruits qui peuvent nuire au confort d'utilisation de cette machine.

Il est donc impératif de réduire fortement ou de supprimer les balourds du rotor pour éviter ces phénomènes de vibrations.

Pour cela, il est prévu d'équilibrer dynamiquement le rotor en fonction de spécifications établies pour chaque machine (niveau de bruit, fréquence de vibration, ...).

Il est connu, notamment par le document FR 1 341 204, de réaliser un équilibrage du rotor par un enlèvement de matière. Plus précisément, pour contrecarrer le balourd du rotor, des usinages, par perçage ou fraisage, sont réalisés dans le corps de ce rotor.

Cet équilibrage par enlèvement de matière présente des inconvénients non négligeables.

En effet, en fonction de l'importance de l'enlèvement de matière, les caractéristiques mécaniques du rotor risquent d'être fortement dégradées.

En outre, les particules métalliques générées par l'usinage sont susceptibles d'entraver le fonctionnement de la machine. Ces particules sont attirées par les parties magnétique du rotor et/ou du stator en créant des perturbations dans le fonctionnement, voire un blocage des deux parties l'une par rapport à l'autre.

Il est également connu, pour équilibrer un rotor, d'ajouter de la matière au corps de ce rotor.

La matière utilisée pour compenser le balourd peut être une pâte, malléable au moment de l'application sur le rotor, qui va se durcir après application et assurer ainsi sa tenue mécanique avec le rotor.

L'équilibrage par ajout de pâte d'équilibrage est cependant difficile à mettre en œuvre car la pâte nécessite, après son application sur le rotor, un temps de séchage qui dépend de paramètres extérieurs, comme la température de l'air, l'hygrométrie,...

Il est donc nécessaire de placer le rotor sur un lieu de stockage pendant une durée très variable.

Cela implique une logistique complexe et augmente le coût de production.

La matière utilisée peut aussi être des masses métalliques calibrées ajoutées au rotor pour réaliser son équilibrage, comme des agrafes, des vis,...

A titre d'exemple et comme cela est mieux décrit dans la demande de brevet FR 2 421 498, ces masses métalliques sont des tôles perforées qui sont fixées par serrage ou collage sur des broches axiales issues du rotor.

Dans ces différents types d'équilibrage par ajout de matière, il a pu cependant être constaté, qu'en cas d'accélérations ou de décélérations angulaires très importantes du rotor et en fonction du vieillissement de la machine, la pâte ou les masses calibrées peuvent se détacher du rotor et entraîner alors une perte de l'équilibrage de ce rotor. Cette perte d'équilibrage déclenche en conséquence des vibrations néfastes au fonctionnement de la machine et au confort de l'utilisateur.

De plus, la pâte ou les masses calibrées, qui se sont détachées, peuvent bloquer la rotation du rotor en provoquant un dysfonctionnement grave de la machine.

Ces inconvénients sont encore plus importants dans le cas d'une machine électrique à reluctance variable.

Cette machine comprend un rotor portant des aimants permanents logés à proximité de barrières de flux portées par ce rotor.

Cette configuration rend alors encore plus difficile l'équilibrage par enlèvement de matière compte tenu du volume réduit de la matière constitutive du rotor et du fait que cet enlèvement à réaliser pour obtenir l'équilibrage doit se faire dans une barrière de flux, qui par définition, est un espace vide.

De même, l'ajout de matière risque de perturber la propagation du flux magnétique des aimants, notamment lorsque cet ajout se fait dans une ou des barrières de flux.

La demande de brevet US 2011/0121668 décrit un rotor d'une machine électrique à aimants permanents avec des possibilités d'équilibrage par ajout ou retrait de matière.

Le brevet US 4486678 décrit un rotor d'une machine électrique à aimants permanents avec des possibilités d'équilibrage au moyen de tiges.

La demande de brevet US 2009/066174 décrit une méthode d'équilibrage d'un rotor d'une machine électrique.

La demande de brevet DE 102010041599 concerne un rotor équilibré pour une machine électrique.

La présente invention vise à remédier aux inconvénients énumérés ci-dessus en assurant l'équilibrage du rotor par un ajout de matière sans que cet ajout puisse perturber le bon fonctionnement de la machine électrique.

A cet effet, la présente invention concerne une machine électrique comprenant un stator et un rotor, ledit rotor étant formé d'un corps de rotor avec un empilage de tôles et placé sur un arbre de rotor, caractérisé en ce que le rotor comprend au moins une cavité de réception d'au moins une masse d'équilibrage dynamique dudit rotor.

La cavité peut être disposée selon l'axe longitudinal du rotor et sensiblement parallèlement à celui-ci.

La cavité peut être formée par un poinçonnage réalisée dans les tôles.

Le rotor peut porter des évidements logeant des générateurs de flux magnétique et des évidements formant des barrières de flux et la cavité peut être formée au voisinage de la périphérie du corps.

La cavité peut être située entre l'évidement logeant le générateur de flux magnétique le plus éloigné de l'arbre de rotor et la périphérie du corps de rotor.

La cavité peut présenter une section fermée.

L'invention concerne également un procédé pour l'équilibrage dynamique d'un rotor d'une machine électrique, ledit rotor comprenant un corps de rotor formé par un empilage de tôles et placé sur un arbre de rotor, caractérisé en ce que :
- on détermine le balourd du rotor,
- on détermine la quantité de masse d'équilibrage nécessaire pour contrebalancer le balourd déterminé,
- on introduit au moins une masse d'équilibrage dans au moins une cavité de réception placé dans le corps du rotor.

On peut introduire à force la masse d'équilibrage dans la cavité pour l'immobiliser.

Les autres caractéristiques et avantages de l'invention vont apparaître maintenant à la lecture de la description qui va suivre, donnée à titre uniquement illustratif et non limitatif, et à laquelle sont annexées :
- la figure 1 qui est une vue schématique en coupe axiale du rotor de l'invention selon la ligne 1-1 de la figure 2 et
- la figure 2 qui est une vue schématique en coupe radiale du rotor selon la ligne 2-2 de la figure 1.

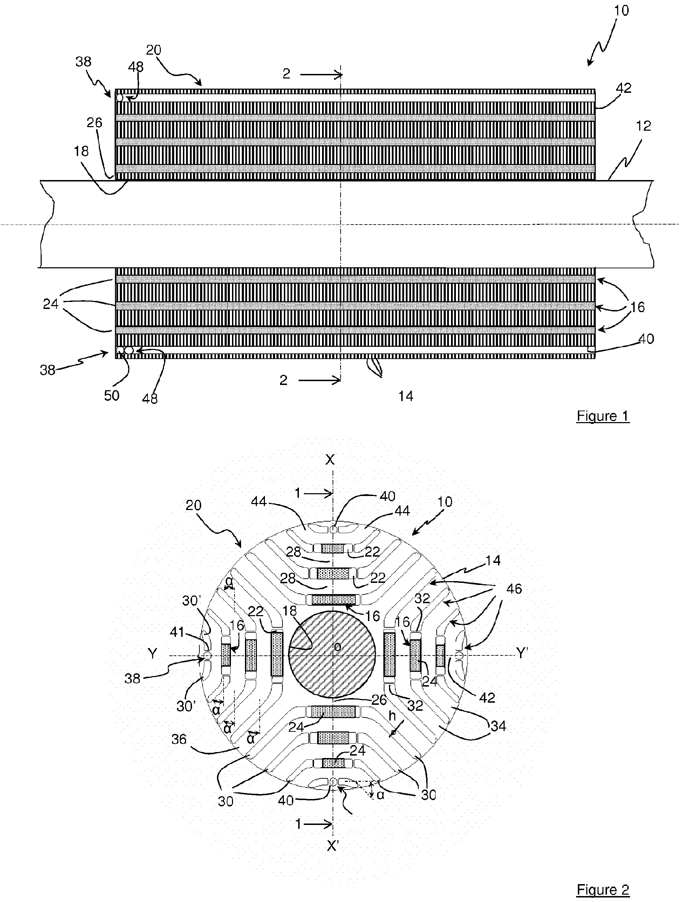

Selon la forme de réalisation illustrée aux figures 1 et 2, une machine électrique tournante comporte un stator (non représenté) et un rotor 10.

Comme illustré sur la figure 1, ce rotor comporte, de manière connue en soi, un arbre 12, de préférence magnétique, sur lequel est placé un empilage de tôles ferromagnétiques planes identiques 14 portant une pluralité de générateurs de flux magnétiques 16.

En se rapportant à la figure 2, les tôles 14 de forme circulaire comprennent un alésage central 18 traversé par l'arbre de rotor 12 et une pluralité d'évidements axiaux qui traversent les tôles de part en part.

Comme cela est connu, les tôles sont assemblées les unes aux autres en faisant correspondre les alésages et les évidements par tous moyens connus, comme le collage, le pressage,...

Ainsi assemblées, les tôles forment le corps 20 du rotor 10 qui porte l'arbre 12 par les alésages centraux 18.

Cette configuration est plus particulièrement appliquée à une machine électrique à reluctance variable comme cela sera mieux décrit ci-après.

Dans cette configuration, le corps comprend une première série d'évidements axiaux qui loge des générateurs de flux magnétiques et une autre série d'évidements axiaux qui permet de créer des barrières de flux magnétiques.

La première série d'évidements 22 est ici en forme de quadrilatère, ici rectangle. Ces évidements 22 reçoivent les générateurs de flux magnétiques, ici des aimants permanents 24 sous forme de barreau également rectangulaire de longueur sensiblement égale à la longueur du corps. Ces évidements sont appelés dans la suite de la description "logements".

Ces logements 22 sont disposés radialement les uns au-dessus des autres et à distance les uns des autres à partir du centre O de l'alésage 18.

Comme mieux visible sur la figure 2, ces logements rectangulaires 22 sont répartis selon des axes XX' et YY' sensiblement orthogonaux et passant par le centre O.

Dans l'exemple de la figure 2, chaque demi-axe (OX, OX' ; OY, OY') portent trois logements axiaux 22 dont les faces de plus grande longueur sont perpendiculaires aux demi-axes et dont les dimensions de ces faces vont en diminuant du centre O vers la périphérie de l'empilage de tôles. De même, la hauteur de ces logements va en se réduisant du centre O vers cette périphérie.

Le logement 22 le plus proche de l'alésage 18 laisse subsister un pont de matière 26 avec cet alésage et un pont de matière 28 demeure entre chaque logement.

Le logement 22 le plus loin de l'alésage 18 est placé à distance du bord périphérique du corps.

L'autre série d'évidements consiste en des perforations 30, de hauteur h sensiblement constante et de direction radiale inclinée, qui partent de ces logements pour arriver au voisinage du bord des tôles.

Ces perforations partent du bord latéral 32 des logements 22 et s'élèvent, selon un angle α par rapport à une droite parallèle aux logements 22, pour arriver à ce voisinage.

Tel que cela est représenté sur la figure 2, les perforations inclinées sont disposées symétriquement par rapport aux logements. Plus précisément, une série de trois perforations inclinées est placée d'un côté du demi-axe et un autre série de trois perforations inclinées est placée de l'autre côté de ce même demi-axe.

Ainsi, il se forme à chaque fois une figure géométrique sensiblement en forme de V à fond aplati avec le fond plat formé par le logement 22 et avec les bras inclinés de ce V formés par les perforations 30. On obtient alors, sur chaque demi-axes, trois formes en V superposées et à distance les unes des autres et de dimensions en hauteur et en largeur qui diminuent de l'alésage vers la périphérie du corps.

Ainsi, outre les ponts de matière 26, 28, il subsiste une partie pleine 34 entre les perforations inclinées de chaque forme en V et une autre partie pleine 36 entre la perforation la plus proche de l'alésage d'une série de trois formes en V et la perforation la plus proche de l'alésage d'une autre série voisine de formes en V.

Ce corps comprend en outre au moins une cavité de réception 38 de masses d'équilibrage du rotor située entre la forme en V la plus éloignée de l'alésage du corps et la périphérie du corps du rotor.

Dans l'exemple des figures, il est prévu une cavité placée sur chaque demi-axe.

Avantageusement, cette cavité s'étend d'une face latérale du corps jusqu'à l'autre face et en étant sensiblement parallèle à l'arbre 12.

Cette cavité résulte d'un poinçonnage 40 effectué sur chaque tôle et de l'assemblage des tôles les unes avec les autres en formant ainsi cette cavité.

De plus, il est également prévu deux perforations 30' inclinées d'un angle α qui partent du voisinage de la cavité 38 en laissant subsister une paroi 41 et qui aboutissent au voisinage du bord périphérique du corps en étant symétrique l'une avec l'autre par rapport au demi-axe. De ce fait, la cavité est placée entre les deux perforations 30.

Il se forme ainsi un pont de matière 42 entre la cavité et le logement ainsi qu'une partie pleine 44 entre les perforations 30 et 30'.

Par cela, il se crée des barrières de flux 46 formées par les perforations. Le flux magnétique provenant des aimants ne peut alors que transiter par les ponts de matière et les parties pleines.

La cavité présente, dans le cas des figures, une section fermée, ici circulaire, mais toute autre section peut être envisagée, comme une section polygonale.

Cette cavité est donc adaptée à recevoir au moins une masse d'équilibrage 48 qui est immobilisée cette cavité.

Cette masse peut présenter une section semblable à celle de la cavité mais avec un dimensionnement supérieur en section pour pouvoir être immobilisée dans celle-ci.

A titre d'exemple, pour une cavité de section circulaire, la masse d'équilibrage peut être une bille 50 de diamètre supérieur à celle de la cavité de façon à ce que cette bille soit maintenue dans la cavité par friction.

Dans un autre exemple, la masse d'équilibrage peut présenter une section différente mais complémentaire à celle de la cavité, telle qu'un barreau de section polygonal que l'on introduit à force dans la cavité de section circulaire.

Pour réaliser l'équilibrage du rotor 10, il est nécessaire tout d'abord de définir et de localiser les balourds à équilibrer.

Cette opération est réalisée sur des machines appropriées qui sont largement connues par l'homme du métier.

Ceci permet de déterminer, généralement par le calcul et selon des lois de correction de balourds, la quantité et le positionnement de masses d'équilibrage à ajouter au rotor pour l'équilibrer.

Le procédé selon l'invention consiste donc à ajouter une ou plusieurs masses d'équilibrage, ici sous forme de billes, dans une ou plusieurs cavités 38.

Grâce à cela, il peut être réalisé un équilibrage du rotor sans le fragiliser par enlèvement de matière ou de perturber la transmission du flux magnétique par l'enlèvement ou l'ajout de matière d'équilibrage dans les ponts et/ou les parties pleines.

## Revendications

1. Machine électrique comprenant un stator et un rotor (10), ledit rotor (10) étant formé d'un corps de rotor (20) avec un empilage de tôles (14) et placé sur un arbre de rotor (12), ledit rotor (10) portant des évidements (22) rectangulaires logeant des générateurs de flux magnétique (16) et des évidements (30) formant des barrières de flux magnetique (46), lesdits évidements (22) rectangulaires logeant les générateurs de flux magnétique (16) sont répartis selon des axes orthogonaux (XX', YY') et passant par le centre (O) dudit rotor (10), **caractérisé en ce que** chaque demi-axe (OX, OX', OY, OY') portant trois évidements (22) rectangulaires logeant les générateurs de flux magnétique (16) dont les faces de plus grande longueur sont perpendiculaires aux demi-axes (OX, OX', OY, OY') et dont les dimensions de ces faces vont en diminuant du centre (O) vers la périphérie dudit corps de rotor (20), **en ce que** les évidements (30) formant des barrières de flux magnétique (46) sont de hauteur (h) constante et de direction radiale inclinée, partant de ces évidements (22) rectangulaires logeant des générateurs de flux magnétique (16) pour arriver au voisinage du bord des tôles (14), et sont disposés symétriquement par rapport auxdits évidements (22) rectangulaires logeant des générateurs de flux magnétique (16) en formant une figure géométrique en forme de V à fond aplati avec le fond plat formé par un évidement (22) rectangulaire logeant le générateur de flux magnétique (16) et avec les bras inclinés de ce V formés par les évidements (30) formant des barrières de flux magnétique (46), obtenant sur chaque demi-axes (OX, OX', OY, OY') trois formes en V superposées et à distance les unes des autres et de dimensions en hauteur et en largeur diminuant de l'alésage vers la périphérie du corps du rotor 820) et ce que le rotor (10) comprend au moins une cavité (38) de réception d'au moins une masse d'équilibrage (48) dynamique dudit rotor 810), ladite cavité (38) étant située entre l'évidement (22) rectangulaire logeant le générateur de flux magnétique (16) le plus éloigné de l'arbre de rotor (12) et la périphérie du corps de rotor (20), au voisinage de la périphérie du corps de rotor (20).

2. Machine électrique selon la revendication 1, **caractérisé en ce que** la cavité (38) est disposée selon l'axe longitudinal du rotor et sensiblement parallèlement à celui-ci.

3. Machine électrique selon la revendication 1 ou 2, **caractérisé en ce que** la cavité (38) est formée par un poinçonnage (40) réalisée dans les tôles.

4. Machine électrique selon l'une des revendications précédentes, **caractérisé en ce que** la cavité (38) présente une section fermée.

## Patentansprüche

1. Elektrische Maschine, umfassend einen Stator und einen Rotor (10), wobei der Rotor (10) aus einem Rotorkörper (20) mit einem Stapel von Blechen (14) gebildet und auf einer Rotorwelle (12) angeordnet ist, wobei der Rotor (10)) rechteckige Aussparungen (22) tragen, die Magnetflussgeneratoren (16) und Aussparungen (30) aufnehmen, die Magnetflussbarrieren (46) bilden, wobei die rechteckigen Aussparungen (22), die die Magnetflussgeneratoren (16) aufnehmen, entlang orthogonaler Achsen (XX', YY') verteilt sind, und durch die Mitte (O) des Rotors (10) verlaufend, **dadurch gekennzeichnet, dass** jede Halbachse (OX, OX', OY, OY ') drei Aussparungen (22) trägt, die rechteckig die Magnetflussgeneratoren (16) deren Flächen größerer Länge senkrecht zu den Halbachsen (OX, OX ', OY, OY') sind und deren Abmessungen dieser Flächen von der Mitte (O) zum Umfang des Rotorkörpers (20) in dass die Aussparungen (30), die Magnetflussbarrieren (46) bilden, die Höhe (h) haben konstant und in geneigter radialer Richtung, ausgehend von diesen rechteckigen Aussparungen (22), in denen Magnetflussgeneratoren (16) untergebracht sind, um in der Nähe der Kante der Bleche (14) anzukommen, und symmetrisch zu den rechteckigen Aussparungen (22) angeordnet sind. Unterbringen von Magnetflussgeneratoren (16) durch Bilden einer geometrischen Figur in Form eines V mit einem abgeflachten Boden, wobei der flache Boden durch eine rechteckige Aussparung (22) gebildet wird, in der der Magnetflussgenerator (16) untergebracht ist, und mit den geneigten Armen dieses V. gebildet durch die Aussparungen (30), die Magnetflussbarrieren (46) bilden, wobei auf jeder Halbachse (OX, OX', OY, OY') drei übereinanderliegende V-Formen und in einem Abstand voneinander und mit Abmessungen in Höhe und Höhe erhalten werden Breite, die von der Bohrung zum Umfang des Rotorkörpers (20) abnimmt und dass der Rotor (10) mindestens einen Hohlraum (38) zum Aufnehmen mindestens einer dynamischen Ausgleichsmasse (48) des Rotors (10) aufweist, wobei der Hohlraum (38) befindet sich zwischen dem rechteckiger Hohlraum (22), in dem der Magnetflussgenerator (16) untergebracht ist, der am weitesten von der Rotorwelle (12) und dem Umfang des Rotorkörpers (20) entfernt ist und an den Umfang des Rotorkörpers (20) angrenzt.

2. Elektrische Maschine nach Anspruch 1, **dadurch gekennzeichnet, dass** der Hohlraum (38) entlang der Längsachse des Rotors und im wesentlichen parallel zu diesem angeordnet ist.

3. Elektrische Maschine nach Anspruch 1 oder 2, **dadurch gekennzeichnet, dass** der Hohlraum (38) durch Stanzen (40) in den Blechen gebildet wird.

4. Elektrische Maschine nach einem der vorhergehenden Ansprüche, **dadurch gekennzeichnet, dass** der Hohlraum (38) einen geschlossenen Abschnitt aufweist.

## Claims

1. Electric machine comprising a stator and a rotor (10), said rotor (10) being formed of a rotor body (20) with a stack of sheets (14) and placed on a rotor shaft (12), said rotor (10) carrying rectangular recesses (22) housing magnetic flux generators (16) and recesses (30) forming magnetic flux barriers (46), said rectangular recesses (22) housing the magnetic flux generators (16)) are distributed along orthogonal axes (XX ', YY') and passing through the center (O) of said rotor (10), **characterized in that** each semi-axis (OX, OX ', OY, OY') carrying three rectangular recesses (22) housing the magnetic flux generators (16) whose faces of greater length are perpendicular to the semi-axes (OX, OX', OY, OY') and whose dimensions of these faces decrease from the center (O) towards the periphery of said rotor body (20), **in that** the recesses (30) forming magnetic flux barriers (46) are of constant height (h) and of inclined radial direction, starting from these rectangular recesses (22) housing magnetic flux generators (16) to arrive in the vicinity of the edge of the sheets (14), and are arranged symmetrically with respect to said rectangular recesses (22) housing magnetic flux generators (16) by forming a geometric figure in the form of a V with a flattened bottom with the flat bottom formed by a rectangular recess (22) housing the magnetic flux generator (16) and with the inclined arms of this V formed by the recesses (30) forming magnetic flux barriers (46), obtaining on each semi-axes (OX, OX ', OY, OY') three superimposed V shapes and at a distance from each other and of dimensions in height and in width decreasing from the bore towards the periphery of the rotor body (20) and that the rotor (10) comprises at least one cavity (38) for receiving at least one dynamic balancing mass (48) of said rotor (10), said cavity (38) being located between the rectangular void (22) housing the magnetic flux generator (16) furthest from the rotor shaft (12) and the periphery of the rotor body (20), adjacent to the periphery of the rotor body (20).

2. Electric machine according to claim 1, **characterized in that** the cavity (38) is arranged along the longitudinal axis of the rotor and substantially parallel thereto.

3. Electric machine according to claim 1 or 2, **characterized in that** the cavity (38) is formed by a punching (40) made in the sheets.

4. Electric machine according to one of the preceding claims, **characterized in that** the cavity (38) has a closed section.
